**Europäisches Patentamt**

**European Patent Office**

**Office européen des brevets**

(19)

(11) Publication number : **0 534 776 A1**

## (12) EUROPEAN PATENT APPLICATION

(21) Application number : **92308747.2**

(22) Date of filing : **25.09.92**

(51) Int. Cl.$^5$ : **C08F 297/08, C08L 53/00**

(30) Priority : **27.09.91 JP 248205/91**

(43) Date of publication of application :
**31.03.93 Bulletin 93/13**

(84) Designated Contracting States :
**BE DE FR GB IT NL**

(71) Applicant : **SUMITOMO CHEMICAL COMPANY, LIMITED**
**5-33 Kitahama 4-chome Chuo-ku**
**Osaka-shi Osaka (JP)**

(72) Inventor : **Sadatoshi, Hajime**
**1-9-546, Yushudainishi**
**Ichihara-shi, Chiba (JP)**
Inventor : **Sakai, Jiro**
**4-24-13, Sakuradai**
**Ichihara-shi, Chiba (JP)**
Inventor : **Wakamatsu, Kazuki**
**6-11-13, Nagauraekimae**
**Sodegaura-shi, Chiba (JP)**

(74) Representative : **Diamond, Bryan Clive et al**
**Gee & Co., Chancery House, Chancery Lane**
**London WC2A 1QU (GB)**

(54) **Block copolymers of ethylene and propylene.**

(57) An ethylene-propylene block copolymer or composition comprises by weight :

(a) 80-95% of a crystalline polypropylene component comprising a propylene homopolymer or a copolymer of propylene and not more than one mole% of ethylene of an $\alpha$-olefin having 4 or more carbon atoms said copolymer having intrinsic viscosity $[\eta]_P$ of 0.8 to 2.0 dl/g, a ratio of weight average molecular weight Mw to number average molecular weight Mn of 3.0 to 5.0 as measured by gel permeation chromatography, and xylene-soluble content at 20°C of not more than 1.5% by weight ; and

(b) 5-20% of an ethylene-propylene random copolymer component having a composition consisting of ethylene and propylene in a weight ratio of ethylene to propylene of 20/80 to 60/40 and an intrinsic viscosity $[\eta]_{EP}$ of 3.5 to 8.5 dl/g.

Methods of preparing the two polymer components are described ; the two are then admixed, optionally with other additives, especially an ethylene-$\alpha$-olefin rubber.

The product has good rigidity, impact strength, flow characteristics and appearance and is useful for molded parts, e.g. for automobiles.

**EP 0 534 776 A1**

This invention relates to ethylene-propylene block copolymers which have excellent in rigidity, impact resistance, tensile characteristics and heat resistance.

Polypropylene is widely used in the fields of articles of daily use, household appliance parts, automobile parts and industrial parts, because it has excellent characteristics and is relatively inexpensive. There has been a tendency to reduce the wall thickness of molded articles as these articles have been made larger, and thus to reduce their weight.

Accordingly, there has been a need for a form of polypropylene which is excellent in heat-resistance, rigidity and impact-resistance and has high flow characteristics.

Heretofore, there have been proposed many polypropylene compositions comprising a mixture of crystalline polypropylene with polyethylene or with a rubbery material such as an amorphous ethylene-propylene copolymer to alleviate the disadvantages associated with conventional polypropylene or polypropylene compositions. Further, many compositions containing inorganic fillers such as talc have been proposed, to improve the properties of the compositions with regard to a lowering in rigidity or heat-resistance caused by the addition of rubbery materials. However, melt flow characteristics are greatly lowered by the addition of the rubbery materials or inorganic fillers; a striped pattern (so-called flow marks) peculiar to injection-molded articles is formed; and the strength of welded joints and the appearance of the articles is impaired.

For improving melt flow characteristics, a method is known wherein a small amount of an organic peroxide is added to polypropylene having low melt flow characteristics or a composition thereof, and the mixture is heat-treated. However, polypropylene thus obtained suffers a lowering in rigidity or a problem of malodor caused by the heat treatment, and the composition containing the rubbery material or inorganic filler causes a problem in that intense flow marks are formed on the surface of the injection molded article so as to affect its appearance. Polypropylene which is heat treated is thus not satisfactory.

Propylene block copolymers are known to have good rigidity as well as good impact resistance. However, the block copolymers are still inadequate from the viewpoint of balanced properties including flow characteristics, rigidity and impact strength, to allow their use as household appliance parts or automobile external materials or interior finish materials, for which high impact resistance, particularly low-temperature impact resistance, rigidity and heat resistance are required.

The present invention provides an ethylene-propylene block copolymer which is excellent in rigidity, impact resistance and melt flow characteristics and gives molded articles having good appearance.

According to the present invention an ethylene-propylene copolymer comprises a crystalline polypropylene moiety comprising a propylene homopolymer or a copolymer of propylene and not more than one mole% of ethylene or an $\alpha$-olefin having 4 or more carbon atoms; and an ethylene-propylene random copolymer moiety of a composition consisting of ethylene and propylene in a weight ratio of ethylene to propylene of 20/80 to 60/40, wherein:

(1) said polypropylene moiety has an intrinsic viscosity $[\eta]_P$ of 0.8 to 2.0 dl/g, a specific Q value as a ratio of weight average molecular weight Mw to number average molecular weight Mn of 3.0 to 5.0 as measured by the gel permeation chromatography (GPC), and a xylene-soluble matter content at 20°C of not more than 1.5% by weight;

(2) said ethylene-propylene random copolymer moiety has an intrinsic viscosity $[\eta]_{EP}$ of 3.5 to 8.5 dl/g; and

(3) said ethylene-propylene random copolymer moiety accounts for 5 to 20% by weight of the amount of the entire polymer.

The ethylene-propylene block copolymer of the present invention comprises a polypropylene moiety comprising a propylene homopolymer or a copolymer of propylene and not more than one mole% of ethylene or an $\alpha$-olefin having 4 or more carbon atoms (e.g., butene-1, hexene-1); and 5 to 20% by weight, based on the amount of the entire polymer, of an ethylene-propylene random copolymer moiety having a composition consisting of ethylene and propylene in a ratio by weight of ethylene to propylene of 20/80 to 60/40.

The block copolymer can be generally obtained by two-stage polymerization in the presence of a Ziegler-Natta catalyst composed of a combination of titanium trichloride and an alkylaluminum compound. In the practice of the present invention, however, it is preferred that a catalyst comprising a composite material of titanium trichloride and magnesium, a trialkylaluminum compound and an electron-donative organic compound is used.

A method for preparing the catalyst is fully described in JP-A-61-218606 (the term "JP-A" as used herein means an unexamined published Japanese patent application).

Namely, the polymer can be obtained by homopolymerizing or copolymerizing propylene in the presence of a catalyst comprising (A) a trivalent titanium compound-containing solid catalyst component obtained by treating a solid product with an ester compound and a mixture of an ether compound and titanium tetrachloride, the solid product being obtained by reducing a titanium compound represented by formula of $Ti(OR^1)_nX_{4-n}$ (wherein $R^1$ is a hydrocarbon group having 1 to 20 carbon atoms; X is a halogen atom; and n is a positive number of $0<n\leq4$) with an organomagnesium compound in the presence of a silicon compound having an Si-O bond;

(B) an organoaluminum compound; and (C) a silicon compound having an Si-OR$^2$ bond (wherein R$^2$ is a hydrocarbon group having 1 to 20 carbon atoms).

The silicon compound having an Si-O bond is a compound represented by Si(OR$^3$)$_m$R$^4_{4-m}$, R$^5$(R$^6$SiO)$_P$ SiR$^7_3$, or (R$^8_2$SiO)$_q$, wherein R$^3$ is a hydrocarbon group having 1 to 20 carbon atoms; R$^4$, R$^5$, R$^6$, R$^7$, and R$^8$ are each a hydrocarbon group having 1 to 20 carbon atoms or a hydrogen atom; m is a number of 0<m≦4; p is an integer of 1 to 1000; and q is an integer of 2 to 1000. Specific examples of the organosilicon compound include tetramethoxysilane, dimethylmethoxysilane, diethoxydiethylsilane, diethoxydiphenylsilane, triethoxyphenylsilane, cyclohexylethyldimethoxysilane, and phenyltrimethoxysilane.

As the organomagnesium compound, any of organomagnesium compounds having a magnesium-carbon bond can be used. Grignard compounds represented by formula of R$^9$MgX (wherein R$^9$ is a hydrocarbon group having 1 to 20 carbon atoms; and X is a halogen atom) and dialkylmagnesium compounds or diarylmagnesium compounds represented by formula of R$^{10}$R$^{11}$Mg (wherein R$^{10}$ and R$^{11}$ may be the same or different and each is a hydrocarbon group having 1 to 20 carbon atoms) are particularly preferred.

Examples of the ester compound include mono- or polyhydric carboxylic acid esters such as aliphatic carboxylic acid esters, olefinic carboxylic acid esters, alicyclic carboxylic acid esters and aromatic carboxylic acid esters. Among these ester compounds, olefinic carboxylic acid esters such as methacrylic esters and maleic esters as well as phthalic esters are preferred, with diesters of phthalic acid being particularly preferred.

Preferred examples of the ether compound include dialkyl ethers such as diethyl ether, di-n-propyl ether, diisopropyl ether, dibutyl ether, diamyl ether, and methyl n-butyl ether. Particularly preferred are di-n-butyl ether and diisoamyl ether.

In the polymerization, a molar ratio of the organoaluminum compound to the titanium compound/ magnesium compound composite material can be selected within the range of 3/1 to 20/1. A molar ratio of the silane compound having an Si-OR$^2$ bond and the titanium compound/magnesium compound composite material can be selected within the range of 1/10 to 1/2.

The ethylene-propylene block copolymer comprises:

(I) a crystalline polypropylene moiety which (1) has an intrinsic viscosity [η]$_P$ of 0.8 to 2.0 dl/g, preferably 0.8 to 1.7 dl/g, more preferably 0.85 to 1.5 dl/g as measured in tetralin at 135°C, (2) has a Q value (i.e., a ratio of weight average molecular weight Mw to number average molecular weight Mn) of 2.5 to 5.5, preferably 3 to 5 as measured by GPC, and (3) accounts for 95 to 80% by weight of the amount of the entire copolymer; and

(II) an ethylene-propylene random copolymer moiety which (1) has an intrinsic viscosity [η]$_{EP}$ of 3.5 to 8.0 dl/g, preferably 3.5 to 7.0 dl/g as measured in tetralin at 135°C, (2) has a composition consisting of ethylene and propylene in a ratio by weight of 20/80 to 60/40, and (3) accounts for 5 to 20% by weight of the amount of the entire copolymer.

The ethylene-propylene block copolymer can be obtained by two-stage polymerization wherein the above components (I) and (II) are polymerized in order by a slurry polymerization method or a vapor phase polymerization method. The slurry polymerization method is preferable.

When the component (I) has an intrinsic viscosity [η]$_P$ of lower than 0.8 dl/g, the mechanical strength is lowered, while when the intrinsic viscosity exceeds 2.0 dl/g, the melt flow characteristics of the ethylene-propylene block copolymer are lowered. When the Q value exceeds 5.5, weldlines of injection molded articles obtained from the ethylene-propylene block copolymer are intensely formed, while when the Q value is less than 2.5, flow marks are formed.

When the component (II) has an intrinsic viscosity [η]$_{EP}$ of less than 3.5 dl/g, the impact resistance is low, while when the intrinsic viscosity exceeds 8.0 dl/g, the melt flow characteristics are lowered, and the constituent components in the composition are poorly dispersed and, hence, the impact resistance is lowered. Further, when the ethylene-propylene random copolymer has an ethylene content of less than 20% by weight or exceeding 60% by weight, the impact resistance of molded articles is lowered.

The block copolymer of the present invention can be used alone. Alternatively, the block copolymer of the present invention can be blended with e.g. an ethylene-α-olefin rubber or an inorganic filler, to obtain a composition. When an inorganic filler is blended, the composition comprises at least 50% by weight of the crystalline ethylene-propylene block copolymer of the present invention and 5 to 40% by weight of an inorganic filler and/or 5 to 40% by weight of an ethylene-α-olefin random copolymer rubber. The composition has the following formulations (1), (2) or (3).

| (1) | Crystalline ethylene-propylene block copolymer | 50 to 95% by weight |
|---|---|---|
| | Inorganic filler | 5 to 40% by weight |
| (2) | Crystalline ethylene-propylene block copolymer | 50 to 95% by weight |
| | Ethylene-$\alpha$-olefin random copolymer rubber | 5 to 40% by weight |
| (3) | Crystalline ethylene-propylene block copolymer | 50 to 95% by weight |
| | Inorganic filler | 5 to 40% by weight |
| | Ethylene-$\alpha$-olefin random copolymer rubber | 5 to 40% by weight |

The total amount of the above ingredients is 100% by weight.

Examples of the inorganic filler include talc, mica, calcium carbonate, wollastonite, and glass fibers.

Among these inorganic fillers, talc having an average particle size of not larger than 4.0 $\mu$m, preferably 3.5 to 1.0 $\mu$m is preferred when the effect of improving rigidity, the appearance, etc. are taken into consideration. When the average particle size exceeds 4.0 $\mu$m, the impact strength of molded articles is lowered, while when the average particle size is less than 1.0 $\mu$m, such a small size is not suitable for practical use.

Talc is used in an amount of 5 to 40% by weight, preferably 10 to 35% by weight. When the amount of talc is less than 5% by weight, the effect of improving rigidity is insufficient, while when the amount exceeds 40% by weight, the impact resistance is lowered.

The ethylene-$\alpha$-olefin random copolymer rubber which can be preferably used in the present invention has an ethylene content of 85 to 40% by weight, preferably 85 to 65% by weight, a Mooney viscosity $ML_{1+4}$ (121°C) of 15 to 80, preferably 20 to 70 and an iodine value of 0 to 15.

When the ethylene content is less than 40% by weight, the rigidity of molded articles is greatly lowered, while when the ethylene content exceeds 85% weight, the effect of improving impact resistance is insufficient. When the Mooney viscosity exceeds 80, the flow characteristics of the composition is lowered, or rubber particles are poorly dispersed, and as a result, the impact strength is lowered. When the Mooney viscosity is less than 15, the dispersed particle size of rubber in the composition is too small and, hence, the effect of improving impact resistance is insufficient, and unevennesses are formed on the surface of molded articles.

Examples of the $\alpha$-olefin to be copolymerized with ethylene include propylene, 1-butene, 4-methyl-pentene-1, and 1-hexene, with propylene and 1-butene being preferred. The ethylene-$\alpha$-olefin random copolymer rubber may be copolymerized with a small amount of a non-conjugated diene monomer such as ethylidenenorbornene, dicyclopentadiene, and 1,4-hexadiene in such an amount as to give an iodine value of 0 to 15, preferably 0 to 10. Two or more of these ethylene-$\alpha$-olefin random copolymer rubbers may be mixed by taking the flow characteristics of the composition, the impact strength and hardness of the molded article, and the like into consideration. The copolymer rubber is used in an amount of 5 to 40% by weight, preferably 5 to 35% by weight. When the amount of the ethylene-$\alpha$-olefin random copolymer rubber is less than 5% bY weight, the effect of improving impact resistance is insufficient, while when the amount exceeds 40% by weight, the rigidity is greatly lowered.

The ethylene-$\alpha$-olefin random copolymer rubber is generally prepared by polymerization in a hydrocarbon solvent in the presence of a catalyst comprising a vanadium compound and an organoaluminum compound. Examples of the vanadium compound include vanadium oxytrichloride, vanadium tetrachloride, and vanadate compounds. Examples of the organoaluminum compound include ethylaluminum sesquichloride and diethylaluminum chloride. The polymerization is carried out in a solvent such as hexane and heptane.

The composition of the present invention can be prepared by mixing the ethylene-propylene block copolymer, the ethylene-$\alpha$-olefin random copolymer rubber and/or the inorganic filler in a tumbler, a Henschel mixer, or a ribbon blender and melt-kneading the mixture in a single screw extruder, a twin-screw extruder, a Banbury mixer, or a kneader. When an extruder having excellent kneading performance such as a twin-screw extruder, a Banbury mixer, and a kneader is used, the ingredients can be uniformly dispersed, and a composition of good quality can be obtained.

The ingredients may be kneaded either simultaneously or portionwise. Methods for kneading the ingredients portionwise include a method wherein the ethylene-propylene block copolymer is mixed with talc, and the ethylene-$\alpha$-olefin random copolymer rubber is then added thereto; a method wherein a part of the ethylene-propylene block copolymer is previously mixed with the ethylene-$\alpha$-olefin random copolymer rubber to form a master batch, and the master batch is kneaded with the crystalline ethylene-propylene block copolymer and the inorganic filler; and a method wherein the ethylene-propylene block copolymer, the crystalline polypropylene, and talc at high concentrations are kneaded to form a master batch, and the master batch is kneaded with the ethylene-propylene block copolymer, the crystalline polypropylene and the ethylene-a-olefin random copolymer rubber.

Further, the composition of the present invention may contain, in addition to the basic ingredients, additives such as antioxidants, ultraviolet light absorbers, lubricants, antistatic agents, copper inhibitors, flame retarders, neutralizing agents, nucleating agents, blowing agents, plasticizers, pigments, and dyes according to desired purposes. It is desirable that among these additives, antioxidants or ultraviolet light absorbers are added to improve the heat resistance, weather resistance, or stability against oxidation.

The ethylene-propylene block copolymer of the present invention and its composition of the present invention are excellent in rigidity, impact resistance and melt flow characteristics, give molded articles having good appearance, can be molded by injection molding or press molding, and are suitable for use in the fields of external plates for automobiles, interior finish materials for automobiles, and large-size appliance components for washing machines.

The ethylene-propylene block copolymer of the present invention can be prepared in the manner described above. However, when the copolymer is used in fields which require heat resistance, rigidity, mar resistance, gloss, etc. in particular, it is preferred to use highly crystalline polypropylene having such properties that the isotactic pentad fraction of boiling heptane-insoluble matter in the crystalline polypropylene moiety polymerized in the first stage is at least 0.970, the content of boiling heptane-soluble matter is not higher than 5.0% by weight, and the content of xylene-soluble matter at 20°C is not higher than 1.5% by weight.

The isotactic pentad fraction of boiling heptane-insoluble matter, the content of boiling heptane-soluble matter, and the content of xylene-soluble matter at 20°C are determined in the following manner.

A 5 g portion of crystalline polypropylene is completely dissolved in 500 ml of boiling xylene, and the temperature of the solution is lowered to 20°C. After the solution is left to stand for 4 hours, the solution is filtered to separate a xylene-insoluble matter at 20°C. The filtrate is concentrated to dryness to evaporate xylene. Further, the residue is dried at 60°C under vacuum to obtain a polymer soluble in xylene at 20°C. The value (% by weight) obtained by dividing the dry weight by the weight of the charged sample and multiplying the quotient by 100 is the content of xylene-soluble matter at 20°C. The xylene-insoluble matter at 20°C is dried and then subjected to a Soxhlet extraction with boiling n-heptane for 8 hours. The extraction residue is referred to as a boiling heptane-insoluble matter. The value (% by weight) obtained by subtracting the dry weight of the insoluble matter from the weight (5 g) of the charged sample, dividing the resulting value by the weight of the charged sample, and multiplying the quotient by 100 is the content of boiling heptane-soluble matter.

The isotactic pentad fraction is determined according to the method described in A. Zambelli et al., Macromolecules, 6, 925 (1973) and is a fraction of isotactic chain by pentad unit in the molecular chain of crystalline polypropylene as measured by $^{13}$C-NMR, that is, a fraction of propylene monomer units in the center of chain where 5 propylene monomer units are successively bonded to one another by meso bond. The assignment of NMR absorption peak is made according to Macromolecules, 8, 687 (1975).

Specifically, the isotactic pentad fraction is measured as the area fraction of mm mm peaks in the whole absorption peaks of methyl carbon region of $^{13}$C-NMR spectrum. The isotactic pentad fraction of NRL authentic substance, CRM No. M19-14 Polypropylene PP/MMD/2 of National Physical Laboratory, England was measured according to this method, and the isotactic pentad fraction was 0.940.

The present invention is now illustrated in greater detail by reference to the following examples.

In the following examples, physical properties were determined in the following manner.

(1) Melt flow rate (MFR)

MFR was determined according to the method of JIS K 6758. The measurement was made at a temperature of 230°C under a load of 2.16 kg.

(2) Tensile test

The tensile test was carried out according to the method of ASTM D 638. Specimens molded by injection molding were used. The specimens had a thickness of 3.2 mm, and the tensile strength at yield point was evaluated. The measuring temperature was 23°C.

(3) Flexural test

The flexural test was carried out according to the method of JIS K 7203. Specimens molded by injection molding were used. The specimens had a thickness of 6.4 mm, and the flexural modulus and flexural strength were evaluated under such conditions that the span length was 100 mm and the rate of loading was 2.0 mm/min. The measuring temperature was 23°C.

**(4) Izod impact strength**

The Izod impact strength was determined according to the method of JIS K 7110. Specimens molded by injection molding was used. The specimens had a thickness of 6.4 mm. The notched Izod impact strength notched after molding was evaluated. The measuring temperatures were -20°C and -30°C.

**(5) Appearance**

The appearance of molded articles was visually evaluated.
The following criterion was used.
   A: Good,     B: Fair     C: Bad

**Flow mark:**

Striped patterns formed by apparently a difference in gloss which are apt to be formed on parts away from the gate of the molding machine.

**Weldline:**

Linear patterns which are apt to be formed in the junction of a resin during molding.

**Smoothness:**

Unevennesses on the surface of the molded article excluding the weldline.

**(6) Gloss**

The gloss was determined according to the method of JIS Z 8741. The measuring temperature was 23°C, and the specimens had a thickness of 3 mm. The incident angle and reflection angle were each 60°.

**(7) Preparation of composition**

Each composition was prepared in the following manner. A predetermined amount of each ingredient was weighed. Ingredients were uniformly premixed in a Henschel mixer and kneaded in a .continuous twin-screw kneader (TBX 44 SS 30BW-2V type manufactured by Japan Steel Works, Ltd.) under such conditions that the rate of extrusion was 30 kg/hr, the resin temperature was 220°C, and that the number of screw revolutions was 350 rpm. The operation was made under vent suction. The screw was constructed in such a manner that a triple type rotor and a kneading disc were arranged in two kneading zones at the first feed port and the second feed port and in a subsequent zone.

(8) Molding conditions of flat plate

```
Injection molding machine    Manufactured by Sumitomo
                             Shipbuilding & Machinery Co.,
                             Ltd.  Neomat 515/150
```

| Cylinder temperature | NH | H1 | H2 | H3 | H4 |
|---|---|---|---|---|---|
| | 220 | 220 | 220 | 210 | 200 (°C) |

```
Injection pressure          Primary pressure 65 kg/cm²G

Mold temperature            50°C

Injection time/cooling time 15/30 (sec)

Size of molded article (mm) 100 (width) × 400 (length)
                             × 3 (thickness)
```

(9) Measuring conditions of GPC

The gel permeation chromatography (GPC) was carried out under the following conditions. A calibration curve was prepared by using standard polystyrene.

| Device | Model 150CV, manufacted by Milipore Waters Inc. |
|---|---|
| Column | Shodex M/S 80 |
| Measuring temperature | 140°C |
| Solvent | o-dichlorobenzene |
| Sample concentration | 5 mg/8 ml |

Standard Reference Material 706 (polystyrene having an Mw/Mn ratio of 2.1) of NBS (U.S. National Bureau of Standards) was measured under these conditions. As a result, a molecular weight distribution having an Mw/Mn ratio of 2.1 was obtained.

EXAMPLE 1

An SUS-made steel reactor having an internal volume of 5.5 $m^3$ and equipped with a stirrer and a jacket was thoroughly purged with propylene, and 2.5 $m^3$ of n-heptane, 10 mole of triethylaluminum, and 1.5 mole of cyclohexylethyldimethoxysilane were then fed thereinto. The inner temperature was adjusted at 20 to 40°C, the pressure was adjusted at 0.2 kg/cm²G using propylene, and 0.12 kg of a solid catalyst component (synthesized by the method described in Example 1 of JP-A-1-319508) was added thereto. Thereafter, warm water was passed through the jacket to elevate the inner temperature at 75°C, the reaction pressure was elevated at 8 kg/cm²G using propylene and hydrogen, and polymerization was initiated. Propylene was continuously fed so as to keep the reaction pressure at 8 kg/cm²G at a reaction temperature of 75°C, and the polymerization of a crystalline polypropylene moiety (hereinafter referred to as "P moiety") was continued while keeping the hydrogen concentration in the vapor phase portion at 4.6%. At the time when the sum of the amount of propylene fed had reached 1,180 kg, the feed of propylene and hydrogen was stopped, the, unreacted monomers in the reactor were removed by degassing, and the pressure in the reactor was reduced to 0.5 kg/cm²G and at the same time, the temperature in the reactor was adjusted at 60°C.

About 100 g of the polymer in the P moiety was sampled and analyzed. As a result, this polymer had an

7

intrinsic viscosity $[\eta]_P$ of 1.02 dl/g, an Mw/Mn ratio (i.e., Q value) of 3.5 as measured by GPC, and a content of xylene-soluble matter at 20°C of 1.2% by weight. The amount of the formed polymer in the P moiety was calculated from the sum of propylene fed and the weight of unreacted propylene at the time of completion of the polymerization and found to be 846 kg.

Subsequently, the reaction,pressure was elevated at 3 kg/cm³G using propylene and ethylene, and polymerization of an ethylene-propylene copolymer moiety (hereinafter referred to as "EP moiety") was initiated. A propylene/ethylene (3/1 by weight) mixed gas was continuously fed so as to keep the reaction pressure 3 kg/cm²G at a reaction temperature of 60°C, and the polymerization of the EP moiety was continued while keeping the hydrogen concentration in the vapor phase portion at 0.01%.

At the time when the sum of the propylene/ ethylene mixed gas fed had reached 188 kg, the feed of the monomers was stopped, and the whole of a polymer slurry in the reactor was introduced into a deactivation tank and deactivated by butyl alcohol. The resulting polymer slurry was subjected to centrifugal separation to recover a solid polymer, which was then dried by a drier to obtain 940 kg of a white powder. The entire polymer thus obtained had an intrinsic viscosity $[\eta]_T$ of 1.54 dl/g and an ethylene content of 2.3% by weight. Further, the weight ratio of the P moiety to the EP moiety was calculated from the weight of the ultimately obtained polymer and the amount of the polymer in the P moiety and found to be 89/11. Accordingly, the polymer in the EP moiety had an ethylene content of 24% by weight and an intrinsic viscosity $[\eta]_{EP}$ of 6.2 dl/g.

To 100 parts by weight of the obtained ethylene-propylene block copolymer were added, as stabilizers, 0.05 part by weight of calcium stearate, 0.2 part by weight of 2,6-di-t-butyl-4-hydroxytoluene (BHT, made by Sumitomo Chemical Company, Limited), and 0.1 part by weight of tetrakis[methylene-3(3′,5′-t-butyl-4-hydroxyphenyl)propionato]methane (Irganox 1010, made by Ciba-Geigy AG) and, as a nucleating agent, 0.15 part by weight of p-t-butylbenzoic acid aluminum salt, and the mixture was pelletized by a continuous twin-screw kneader and subjected to injection molding to prepare a specimen, which was then provided for measurement of physical properties.

The results of the evaluation are shown in Table 1.

The molded article was good in mechanical characteristics such as rigidity, low-temperature impact strength, and elongation at break as well as in flow characteristics and appearance.

COMPARATIVE EXAMPLE 1

An SUS-made reactor having an internal volume of 5.5 m³ and equipped with a stirrer and a jacket was thoroughly purged with propylene, and 2.7 m³ of n-heptane, 10 mole of diethylaluminum chloride, and 1.0 mole of ε-caprolactone were then fed thereinto. The inner temperature was adjusted at 20 to 40°C, the pressure was adjusted at 0.2 kg/cm²G using propylene, and 0.58 kg of a solid catalyst component (synthesized by the method described in Example 1 of JP-A-60-228504) was added thereto. Thereafter, warm water was passed through the jacket to elevate the inner temperature at 50°C, the reaction pressure was elevated at 9 kg/cm²G using propylene and hydrogen, and polymerization was initiated. Propylene was continuously fed so as to keep the reaction pressure at 9 kg/cm²G at a reaction temperature of 50°C, and the polymerization of the P moiety was continued while keeping the hydrogen concentration in the vapor phase portion at 30%. At the time when the sum of the amount of propylene fed had reached 1,120 kg, the feed of propylene and hydrogen was stopped, the unreacted monomers in the reactor were removed by degassing, and the pressure in the reactor was reduced to 0.5 kg/cm²G. About 100 g of the polymer in the P moiety was sampled and analyzed. As a result, this polymer had an intrinsic viscosity $[\eta]_P$ of 1.38 dl/g, a Q value of 6.1, and a content of xylene-soluble matter at 20°C of 2.5% by weight. The amount of the formed polymer in the P moiety was calculated from the sum of propylene fed and the weight of unreacted propylene at the time of completion of the polymerization and found to be 735 kg.

Subsequently, the reaction pressure was elevated at 3 kg/cm³G using propylene and ethylene, and polymerization of the EP moiety was initiated. A propylene/ethylene (2.5/1 by weight) mixed gas was continuously fed so as to keep the reaction pressure at 3 kg/cm²G at a reaction temperature of 50°C, and the polymerization of the EP moiety was continued while keeping the hydrogen concentration in the vapor phase portion at 0.2%.

At the time when the sum of the propylene/ethylene mixed gas fed had reached 170 kg, the feed of the monomers was stopped, and the whole of a polymer slurry in the reactor was introduced into a deactivation tank and deactivated by butyl alcohol. The resulting polymer slurry was subjected to centrifugal separation to recover a solid polymer, which was then dried by a drier to obtain 875 kg of a white powder. The ethylene-propylene block copolymer thus obtained had an intrinsic viscosity $[\eta]_T$ of 2.18 dl/g and an ethylene content of 4.5% by weight. Further, the weight ratio of the P moiety to the EP moiety was calculated from the weight of the ultimately obtained ethylene-propylene block copolymer and the amount of the polymer in the P moiety and found to be 84/16. Accordingly, the polymer in the EP moiety had an ethylene content of 28% by weight and an intrinsic viscosity $[\eta]_{EP}$ of 6.4 dl/g.

The obtained propylene-ethylene block copolymer was kneaded and granulated under the same condition as in Example 1, except that a mixture of 70% by weight of the above-described ethylene-propylene block copolymer and 30% by weight of homopolypropylene having an intrinsic viscosity $[\eta]$ of 1.35 dl/g and a Q value of 6.3 was used as the polypropylene component such that the EP content was equal to that in Example 1.

The results of the evaluation are shown in Table 1.

As shown in Table 1, the Q value in the P moiety was so high that the resulting molded article was poor in welded appearance and low in elongation at break.

## COMPARATIVE EXAMPLE 2

An ethylene-propylene block copolymer having an intrinsic viscosity $[\eta]_{EP}$ in the EP moiety of 2.8 dl/g was prepared in the same manner as in Example 1, except that in the polymerization of the EP moiety, the hydrogen concentration was increased.

Using this copolymer, pellets of a polypropylene composition were obtained in the same manner as in Example 1 and subjected to injection molding to prepare a specimen, which was then evaluated for the physical properties and appearance.

The results are shown in Table 1.

As shown in Table 1, the molded article was low in $[\eta]_{EP}$ and impact strength.

## EXAMPLE 2

A propylene-ethylene block copolymer in which the P moiety thereof had an intrinsic viscosity $[\eta]_P$ of 1.11 dl/g, a Q value of 3.6, and a content of xylene-soluble matter at 20°C of 1.2% by weight, and the EP moiety thereof accounted for 12% by weight of the amount of the entire polymer and had an intrinsic viscosity $[\eta]_{EP}$ of 4.2 dl/g and an ethylene content of 37% by weight, was prepared in the same manner as in Example 1.

To this propylene-ethylene block copolymer were added the same stabilizers and nucleating agent as used in Example 1. The mixture was melt kneaded, pelletized, and then subjected to injection molding in the same manner as in Example 1, to prepare a specimen, which was then measured for the physical properties.

The results are shown in Table 1.

## COMPARATIVE EXAMPLE 3

A propylene-ethylene block copolymer in which the P moiety thereof had an intrinsic viscosity $[\eta]_P$ of 1.13 dl/g, a Q value of 3.5, and a content of xylene-soluble matter at 20°C of 1.2% by weight, and the EP moiety thereof accounted for 12% by weight of the amount of the entire polymer and had an intrinsic viscosity $[\eta]_{EP}$ of 2.5 dl/g and an ethylene content of 41% by weight, was prepared in the same manner as in Example 1.

To this propylene-ethylene block copolymer were added the same stabilizers and nucleating agent as used in Example 1. The mixture was melt kneaded so as to have a melt flow rate (MFR) of 31 g/10 min, pelletized, and then subjected to injection molding in the same manner as in Example 1, to prepare a specimen, which was then measured for its physical properties.

The results are shown in Table 1.

## EXAMPLE 3

A propylene-ethylene block copolymer in which the P moiety thereof had an intrinsic viscosity $[\eta]_P$ of 0.83 dl/g, a Q value of 3.5, and a content of xylene-soluble matter at 20°C of 1.1% by weight, and the EP moiety thereof accounted for 16% by weight of the amount of the entire polymer and had an intrinsic viscosity $[\eta]_{EP}$ of 4.2 dl/g and an ethylene content of 66% by weight, was prepared in the same manner as in Example 1.

To this propylene-ethylene block copolymer were added 17 parts by weight of talc having an average particle size of 2.5 μm and the same additives as used in Example 1. The mixture was melt kneaded to obtain a polypropylene/talc composite material. As shown in Table 1, this composite material was superior in flow characteristics, rigidity, and impact strength.

## COMPARATIVE EXAMPLE 4

A propylene-ethylene block copolymer in which the P moiety thereof had an intrinsic viscosity $[\eta]_P$ of 1.60 dl/g, a Q value of 5.6, and a content of xylene-soluble matter at 20°C of 2.7% by weight, and the EP moiety thereof accounted for 19% by weight of the amount of the entire polymer and had an intrinsic viscosity $[\eta]_{EP}$ of 5.0 dl/g and an ethylene content of 28% by weight, was prepared in the same manner as in Comparative Example 1.

To this propylene-ethylene block copolymer were added 17 parts by weight of talc having an average particle size of 2.5 µm, the same additives as used in Example 1, and a small amount of Sanperox® TY 13 for improving the flow characteristics. The mixture was melt kneaded to obtain a polypropylene/talc composite material having an MFR of 70 g/10 min, which was then evaluated for the physical properties.

The results are shown in Table 1.

As shown in Table 1, the molded article was inferior in the rigidity to that obtained in Example 3. Further, the molded article was remarkable in flow marks and poor in appearance.

## EXAMPLE 4

A propylene-ethylene block copolymer in which the P moiety thereof had an intrinsic viscosity $[\eta]_P$ of 1.75 dl/g, a Q value of 3.6, and a content of xylene-soluble matter at 20°C of 1.2% by weight, and the EP moiety thereof accounted for 16% by weight of the amount of the entire polymer and had an intrinsic viscosity $[\eta]_{EP}$ of 4.1 dl/g and an ethylene content of 41% by weight, was prepared in the same manner as in Example 1.

To this propylene-ethylene block copolymer were added the same stabilizers and nucleating agent as used in Example 1. The mixture was melt kneaded, pelletized, and then subjected to injection molding in the same manner as in Example 1, to prepare a specimen, which was then measured for the physical properties.

The results are shown in Table 1.

## COMPARATIVE EXAMPLE 5

A propylene-ethylene block copolymer in which the P moiety thereof had an intrinsic viscosity $[\eta]_P$ of 1.78 dl/g, a Q value of 3.6, and a content of xylene-soluble matter at 20°C of 1.1% by weight, and the EP moiety thereof accounted for 16% by weight of the amount of the entire polymer and had an intrinsic viscosity $[\eta]_{EP}$ of 3.0 dl/g and an ethylene content of 40% by weight, was prepared in the same manner as in Comparative Example 2.

To this propylene-ethylene block copolymer were added the same stabilizers as used in Example 1. The mixture was melt kneaded, pelletized, and then subjected to injection molding in the same manner as in Example 1, to prepare a specimen, which was then measured for the physical properties.

The results are shown in Table 1.

TABLE 1

| Structure of Propylene/Ethylene Block Copolymer | | | | | |
|---|---|---|---|---|---|
| | $[\eta]_P$ | Q Value | $[\eta]_{EP}$ | Ethylene Content in EP Moiety | EP Content |
| | (dl/g) | | (dl/g) | (wt%) | (wt%) |
| Example 1 | 1.02 | 3.5 | 6.2 | 26 | 11 |
| Comparative Example 1 | 1.35 | 5.7 | 6.4 | 28 | 12 |
| Comparative Example 2 | 1.02 | 3.5 | 2.8 | 26 | 12 |
| Example 2 | 1.11 | 3.6 | 4.2 | 37 | 12 |
| Comparative Example 3 | 1.13 | 3.5 | 2.5 | 40 | 12 |
| Example 3 | 0.83 | 3.4 | 4.2 | 42 | 16 |
| Comparative Example 4 | 1.60 | 5.6 | 5.0 | 28 | 19 |
| Example 4 | 1.75 | 3.6 | 4.1 | 41 | 16 |
| Comparative Example 5 | 1.78 | 3.6 | 3.0 | 40 | 16 |

## TABLE 1 (Cont'd.)

| | MFR (g/10 min) | Physical Properties of Composition | | | | Izod Impact Strength (kg·cm/cm²) | | Appearance of Molded Article | | |
| | | Flexural Test | | Strength at Yield Point (kgf/cm²) | Elonga-tion at Break (%) | | | | Flow | |
| | | Modulus (kgf/cm²) | Strength (kgf/cm²) | | | at 23°C | at 0°C | Gloss | Mark | Weld |
|---|---|---|---|---|---|---|---|---|---|---|
| Example 1 | 28 | 16,800 | 420 | 330 | 340 | 6.0 | 2.8 | 88 | A | A |
| Comparative Example 1 | 30 | 13,200 | 320 | 270 | 160 | 6.2 | 3.0 | 80 | A | C |
| Comparative Example 2 | 37 | 16,200 | 410 | 320 | 190 | 3.4 | 2.0 | 86 | A | A |
| Example 2 | 32 | 15,500 | 440 | 320 | 640 | 7.0 | 5.2 | 88 | A | A |
| Comparative Example 3 | 30 | 15,300 | 420 | 310 | 450 | 4.3 | 2.2 | 88 | A | A |
| Example 3 | 66 | 27,100 | 490 | 300 | 14 | 3.8 | 2.6 | – | A | A |
| Comparative Example 4 | 68 | 21,800 | 410 | 280 | 10 | 3.9 | 2.7 | – | A | C |
| Example 4 | 3.1 | 12,800 | 350 | 300 | >800 | 12 | 8 | 70 | A | A |
| Comparative Example 5 | 3.3 | 10,200 | 290 | 280 | >800 | 18 | 9 | 74 | C | A |

In the light of the above, by use of an ethylene-propylene block copolymer of the present invention, molded articles which are superior in impact strength, rigidity, and flow characteristics and good in appearance can be obtained.

## Claims

1. An ethylene-propylene block copolymer comprising (a) a crystalline polypropylene moiety comprising a propylene homopolymer or a copolymer of propylene and not more than one mole% of ethylene or an $\alpha$-olefin having 4 or more carbon atoms; and (b) an ethylene-propylene random copolymer moiety having a composition consisting of ethylene and propylene in a weight ration of ethylene to propylene of 20/80 to 60/40, wherein:
   (1) said crystalline polypropylene moiety (a) has an intrinsic viscosity $[\eta]_P$ of 0.8 to 3.0 dl/g measured in tetralin at 135°C, a specific Q value which is the ratio of weight average molecular weight Mw to number average molecular weight Mn of 3.0 to 5.0 as measured by gel permeation chromatography, and an xylene-soluble matter content at 20°C of not more than 1.5% by weight;
   (2) said ethylene-propylene random copolymer moiety (b) has an intrinsic viscosity $[\eta]_{EP}$ of 3.5 to 8.5 dl/g measured in tetralin at 135°C; and
   (3) said ethylene-propylene random copolymer moiety accounts for 5 to 20% by weight of the amount of the entire polymer.

2. A block copolymer as claimed in Claim 1, wherein said crystalline moiety (a) is a copolymer of propylene and butene-1 or hexene-1.

3. A block copolymer as claimed in Claim 1 or 2, wherein in the moiety (a) the intrinsic viscosity is 0.8 to 1.7 dl/g and the Q value is 2.5 to 5.5.

4. A block copolymer as claimed in Claim 1 or 2, wherein in the random moiety (b) the intrinsic viscosity is 3.5 to 7.0 dl/g.

5. A composition comprising a block copolymer as claimed in any preceding claim and an ethylene-$\alpha$-olefin rubber and/or an inorganic filler.

6. A composition as claimed in Claim 5, which includes said rubber which has an ethylene content of 40 to 85% by weight, a Moosey viscosity $ML_{1+4}$ at 121°C of 15 to 80 and an iodine value of 0 to 15.

7. A molded article made from a block copolymer or composition as claimed in any preceding claim.

EP 0 534 776 A1

European Patent Office

**EUROPEAN SEARCH REPORT**

Application Number

EP 92 30 8747

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 276 323 (MITSUI PETROCHEMICAL IND.)<br>* claims * | 1-3 | C08F297/08<br>C08L53/00 |
| | --- | | |
| X | US-A-4 439 573 (FUKUI ET AL.)<br>* claims * | 1,5-7 | |
| | --- | | |
| X | US-A-4 483 966 (SUZUKI ET AL.)<br>* column 8, line 63 - line 64; claims; tables 1-2 * | 1 | |
| | ----- | | |
| | | | TECHNICAL FIELDS SEARCHED (Int. Cl.5) |
| | | | C08F<br>C08L |
| | The present search report has been drawn up for all claims | | |

| Place of search | Date of completion of the search | Examiner |
|---|---|---|
| THE HAGUE | 14 JANUARY 1993 | LOISELET-TAISNE S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

13